# EUROPEAN PATENT APPLICATION

(11) **EP 4 838 896 A1**
(43) Date of publication of application: **11.11.2026**
(21) Application number: 25768448.0
(22) Date of filing: 10.01.2025
(51) Int. Cl.: H04N 21/466, H04N 21/422, H04N 21/488, H04N 21/45, G06N 3/045

(54) **DISPLAY DEVICE FOR OBTAINING PROMPT AND CONTROL METHOD THEREOF**

(30) Priority: 04.03.2024 KR 20240030517
(71) Applicant: Samsung Electronics Co., Ltd., Suwon-si, Gyeonggi-do 16677 (KR)
(72) Inventor: HWANG, Sungjun, Suwon-si, Gyeonggi-do 16677 (KR); BABIO FERNANDEZ, Guadalupe, San Francisco, California 94111 (US); LEI, Kar Yee Kelly, San Francisco, California 94111 (US); SU, Pai Fang, San Francisco, California 94111 (US); LEIGH, Sang-won, San Francisco, California 94111 (US)
(74) Representative: Appleyard Lees IP LLP
(86) International application number: PCT/KR2025/000676
(87) International publication number: WO 2025/187943

(57) **Abstract**

A display device includes a display, a sensor, and one or more processors that identify a user context based on first sensing data received from the sensor, identify a category corresponding to the user context among a plurality of categories based on at least one of emotion information or situation information of a user included in the user context, obtain a prompt corresponding to the user context by providing preference information corresponding to the identified category to a first neural network model, and control the display to display an image corresponding to the prompt.

## Description

### [TECHNICAL FIELD]

The present disclosure relates to a display device and a control method thereof, and more particularly, to a display device for obtaining a prompt and an image corresponding to the prompt and a control method thereof.

### [BACKGROUND ART]

Technologies related to display devices have been rapidly developing, and various types of display devices for viewing content have been widely used even in homes.

In related art, a user directly selects content through the display device, and the display device displays the content selected by the user, and accordingly, content according to a user situation (or a user context) may not be displayed.

For example, inconvenience and difficulty may occur in that the user searches for and selects content exactly matching a user situation.

A demand has arisen for a method of providing content appropriate to a user situation and a user context without a process in which the user manually searches for and selects content, and even when content necessary for (or appropriate to) the user situation does not exist.

### [DISCLOSURE OF INVENTION]

### [SOLUTION TO PROBLEM]

According to an embodiment of the present disclosure, provided is a display device including: a display; a sensor; and at least one processor configured to identify a user context based on first sensing data received from the sensor, identify a category corresponding to the user context among the plurality of categories based on at least one of emotion information or situation information of a user included in the user context, obtain a prompt corresponding to the user context by inputting preference information corresponding to the identified category to a first neural network model, and control the display to display an image corresponding to the prompt, wherein the preference information includes at least one of a preferred activity or a preferred content of the user corresponding to the identified category.

According to an embodiment of the present disclosure, provided is a control method of a display device, the method including: identifying a user context based on first sensing data; identifying a category corresponding to the user context among the plurality of categories based on at least one of emotion information or situation information of a user included in the user context; obtaining a prompt corresponding to the user context by inputting preference information corresponding to the identified category to a first neural network model; and displaying an image corresponding to the prompt, wherein the preference information includes at least one of a preferred activity or a preferred content of the user corresponding to the identified category.

According to an embodiment of the present disclosure, provided is a computer-readable recording medium storing a program for executing a control method of a display device, the method including: identifying a user context based on first sensing data; identifying a category corresponding to the user context among the plurality of categories based on at least one of emotion information or situation information of a user included in the user context; obtaining a prompt corresponding to the user context by inputting preference information corresponding to the identified category to a first neural network model; and displaying an image corresponding to the prompt, wherein the preference information includes at least one of a preferred activity or a preferred content of the user corresponding to the identified category.

### BRIEF DESCRIPTION OF THE DRAWINGS

The above and other aspects and features of embodiments of the present disclosure will become more apparent from the following description taken in conjunction with the accompanying drawings.
FIG. 1 is a diagram illustrating a display device according to an embodiment of the present disclosure.
FIG. 2 is a block diagram illustrating a configuration of the display device according to an embodiment of the present disclosure.
FIG. 3 is a diagram illustrating a category corresponding to a user context according to an embodiment of the present disclosure.
FIG. 4 is a diagram illustrating a prompt corresponding to a user context according to an embodiment of the present disclosure.
FIG. 5 is a diagram illustrating an image corresponding to a prompt according to an embodiment of the present disclosure.
FIG. 6 is a diagram illustrating the display device identifying a user context according to an embodiment of the present disclosure.
FIG. 7 is a diagram illustrating the display device identifying a user context by communicating with an external device according to an embodiment of the present disclosure.
FIG. 8 is a diagram illustrating state information and surrounding environment information of the display device according to an embodiment of the present disclosure.
FIG. 9 is a diagram illustrating a prompt corresponding to a user context according to an embodiment of the present disclosure.
FIG. 10 is a diagram illustrating a prompt corresponding to surrounding environment information of the display device according to an embodiment of the present disclosure.
FIG. 11 is a flowchart illustrating a control method of a display device according to an embodiment of the present disclosure.

### [MODE FOR INVENTION]

Hereinafter, the present disclosure will be described in detail with reference to the accompanying drawings.

Terms used in embodiments of the present disclosure are selected from currently widely used general terms as possible while considering functions in the present disclosure. However, the terms may vary according to intentions of those skilled in the art, precedents, emergence of new technologies, or the like. In addition, in specific cases, terms arbitrarily selected by an applicant may also be used, and, in such cases, the meanings of such terms will be described in detail in corresponding descriptions of the present disclosure. Accordingly, the terms used in the present disclosure should be defined based on the meanings of the terms and the contents throughout the present disclosure, rather than based on simple names of the terms.

In the present disclosure, expressions such as "have," "may have," "include," or "may include" indicate the presence of corresponding features (e.g., numerical values, functions, operations, or components such as parts), and do not exclude the presence of additional features.

An expression such as at least one of A or/and B should be understood as indicating any one of "A," "B," or "A and B."

Expressions such as "first," "second," "firstly," or "secondly" used in the present disclosure may modify various components regardless of order and/or importance. The expressions are used only to distinguish one component from another component and do not limit the corresponding components.

When a component (e.g., a first component) is referred to as being "(operatively or communicatively) coupled with/to" or "connected to" another component (e.g., a second component), it should be understood that the component may be directly connected to the other component, or connected to the other component through another component (e.g., a third component).

A singular expression includes a plural expression unless the context clearly indicates otherwise. In the present application, terms such as "include" or "be configured" are intended to indicate the presence of features, numbers, steps, operations, components, parts, or combinations thereof described in the disclosure, and should not be understood as precluding the presence or addition of one or more other features, numbers, steps, operations, components, parts, or combinations thereof.

In the present disclosure, a "module" or a "unit" may perform at least one function or operation, and may be implemented as hardware or software, or as a combination of hardware and software. In addition, a plurality of "modules" or a plurality of "units" may be integrated into at least one module and implemented as at least one processor, except for a module or a unit required to be implemented as specific hardware.

In the present disclosure, the term "user" may refer to a person using an electronic apparatus or an apparatus using the electronic apparatus (e.g., an artificial intelligence electronic apparatus).

Hereinafter, one or more embodiment of the present disclosure will be described in more detail with reference to the accompanying drawings.

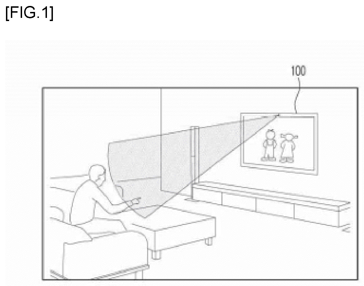

FIG. 1 is a diagram illustrating a display device according to an embodiment of the present disclosure.

Referring to FIG. 1, a display device 100 according to an embodiment of the present disclosure may display content. The display device 100 may be implemented as a television (TV). However, the display device 100 is not limited thereto, and may be applied without limitation to any apparatus having a display function, such as a video wall, a large format display (LFD), digital signage, a digital information display (DID), or a projector display. In addition, the display device 100 may include various types of displays, such as a liquid crystal display (LCD), an organic light-emitting diode (OLED), a liquid crystal on silicon (LCoS), a digital light processing (DLP), a quantum dot (QD) display panel, or quantum dot light-emitting diodes (QLED).

Referring to FIG. 1, the display device 100 may sense a user and identify a user context.

For example, the display device 100 may obtain first sensing data through a sensor and may identify the user context based on the first sensing data. According to an embodiment, the user context may include emotion information or situation information of the user.

According to an embodiment, the display device 100 may obtain a prompt to provide an image corresponding to the user context.

For example, the display device 100 may obtain the prompt by inputting preference information according to the user context to a first neural network model. For example, the display device 100 may identify preference information for an activity preferred by the user (hereinafter, a preferred activity) or content preferred by the user (hereinafter, preferred content) according to the user context, and may obtain a prompt for generating (or obtaining) an image corresponding to the user context by inputting the preference information to the first neural network model.

According to an embodiment, the display device 100 may input the prompt to a second neural network model, and the second neural network model may output (or generate) an image corresponding to the user context based on the prompt.

According to an embodiment, the prompt may include text input to the second neural network model for the neural network model to generate an image corresponding to the user context. According to an embodiment, the prompt may include an instruction (or a command) for a task desired to be performed by the second neural network model and a condition (or information) for adjusting the second neural network model.

According to an embodiment, the display device 100 may provide an image obtained through the second neural network model.

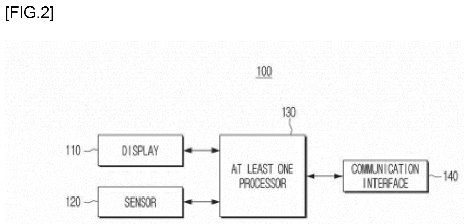

FIG. 2 is a block diagram illustrating a configuration of the display device according to an embodiment of the present disclosure.

Referring to FIG. 2, the display device 100 may include a display 110, a sensor 120, at least one processor 130, and a communication interface 140.

According to an embodiment, the display 110 may be implemented as various types of displays such as a liquid crystal display (LCD), an organic light-emitting diode (OLED), a liquid crystal on silicon (LCoS), a digital light processing (DLP), a quantum dot (QD) display panel, quantum dot light-emitting diodes (QLED), micro light-emitting diodes (µLED), or a mini LED. Meanwhile, the display 110 may also be implemented as a touch screen combined with a touch sensor, a flexible display, a rollable display, a three-dimensional display (3D display), or a display in which a plurality of display modules are physically connected.

According to an embodiment, the sensor 120 may sense the user located in the same space as the display device 100 and may transmit the first sensing data to at least one processor 130.

According to an embodiment, the sensor 120 may include a camera for obtaining image data including the user, a microphone for obtaining voice data of the user, or the like. However, the sensor 120 is not limited thereto, and may further include a light detection and ranging sensor (LiDAR sensor) for sensing a distance between the display device 100 and the user, an infrared (IR) sensor for sensing a user movement or the like, an ultrasonic sensor, a microwave sensor, or the like.

According to an embodiment, the sensor 120 may obtain the first sensing data including at least one of the image data including the user or voice data of the user.

According to an embodiment, at least one processor 130 may generally control an operation of the display device 100. Specifically, at least one processor 130 may be connected to each component included in the display device 100 and may generally control an operation of the display device 100.

At least one processor 130 may perform operations of an electronic apparatus 100 according to various embodiments by executing at least one instruction stored in a memory.

According to an embodiment, at least one processor 130 may be implemented as a digital signal processor (DSP), a microprocessor, or a timing controller (TCON), each of which processes a digital signal. However, at least one processor 130 is not limited thereto, and may include at least one of a central processing unit (CPU), a micro controller unit (MCU), a micro processing unit (MPU), a controller, an application processor (AP), a communication processor (CP), an advanced reduced instruction set computer (RISC) machine (ARM) processor, or an artificial intelligence (AI) processor, or may be defined by the corresponding term. In addition, at least one processor 130 may be implemented as a system on chip (SoC) or a large scale integration (LSI) in which a processing algorithm is embedded, or may be implemented in a form of a field programmable gate array (FPGA). At least one processor 130 may perform various functions by executing computer executable instructions stored in the memory.

At least one processor 130 may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. At least one processor 130 may control one or any combination of other components of the electronic apparatus, and may perform an operation related to communication or data processing. At least one processor 130 may execute at least one program or instruction stored in the memory. For example, at least one processor 130 may perform a method according to an embodiment of the present disclosure by executing at least one instruction stored in the memory.

When a method according to an embodiment of the present disclosure includes a plurality of operations, the plurality of operations may be performed by one processor, or may be performed by a plurality of processors. For example, when a first operation, a second operation, and a third operation are performed by the method according to an embodiment, the first operation, the second operation, and the third operation may all be performed by a first processor, or the first operation and the second operation may be performed by the first processor (for example, a general-purpose processor) and the third operation may be performed by a second processor (for example, an artificial intelligence-dedicated processor).

At least one processor 130 may be implemented as a single core processor including one core, or may be implemented as at least one multicore processor including a plurality of cores (for example, a homogeneous multicore or a heterogeneous multicore). When at least one processor 130 is implemented as a multicore processor, each of the plurality of cores included in the multicore processor may include an internal memory of the processor such as a cache memory or an on-chip memory, and a common cache shared by the plurality of cores may be included in the multicore processor. In addition, each of the plurality of cores included in the multicore processor (or some of the plurality of cores) may independently read and execute a program instruction for implementing the method according to an embodiment of the present disclosure, or all (or some) of the plurality of cores may cooperate to read and execute the program instruction for implementing the method according to an embodiment of the present disclosure.

When the method according to an embodiment of the present disclosure includes a plurality of operations, the plurality of operations may be performed by one core among a plurality of cores included in the multicore processor, or may be performed by the plurality of cores. For example, when a first operation, a second operation, and a third operation are performed by the method according to an embodiment, the first operation, the second operation, and the third operation may all be performed by a first core included in the multicore processor, or the first operation and the second operation may be performed by the first core included in the multicore processor and the third operation may be performed by a second core included in the multicore processor.

In the embodiments of the present disclosure, the processor may refer to a system on chip (SoC) in which at least one processor and other electronic components are integrated, a single core processor, a multicore processor, or a core included in the single core processor or the multicore processor, and the core may be implemented as a CPU, a GPU, an APU, an MIC, a DSP, an NPU, a hardware accelerator, a machine learning accelerator, or the like. However, the embodiments of the present disclosure are not limited thereto.

According to an embodiment, at least one processor 130 may identify the user context based on the first sensing data.

For example, at least one processor 130 may identify the user context based on at least one of image data or voice data included in the first sensing data.

According to an embodiment, the image data may include at least one of a pose of the user, a facial expression of the user, or a surrounding environment of the user, and the voice data may include a voice of the user.

According to an embodiment, at least one processor 130 may identify emotion information of the user based on at least one of a pose of the user, a facial expression of the user, a surrounding environment of the user, or a voice of the user.

For example, at least one processor 130 may identify the emotion information of the user by assigning scores to happiness (happy), anger (anger), contempt (contempt), disgust (disgust), fear (fear), neutral (neutral), sadness (sadness), surprise (surprise), boredom (boring), or the like based on at least one of a pose of the user, a facial expression of the user, a surrounding environment of the user, or a voice of the user.

According to an embodiment, at least one processor 130 may identify situation information of the user based on at least one of a pose of the user, a facial expression of the user, a surrounding environment of the user, or a voice of the user.

For example, at least one processor 130 may identify preparing to go out, going out, immediately after returning home, home workout, resting, cooking, studying, or the like as the situation information of the user based on at least one of a pose of the user, a facial expression of the user, a surrounding environment of the user, or a voice of the user.

According to an embodiment, at least one processor 130 may identify one of a plurality of categories based on the user context including at least one of the emotion information or the situation information.

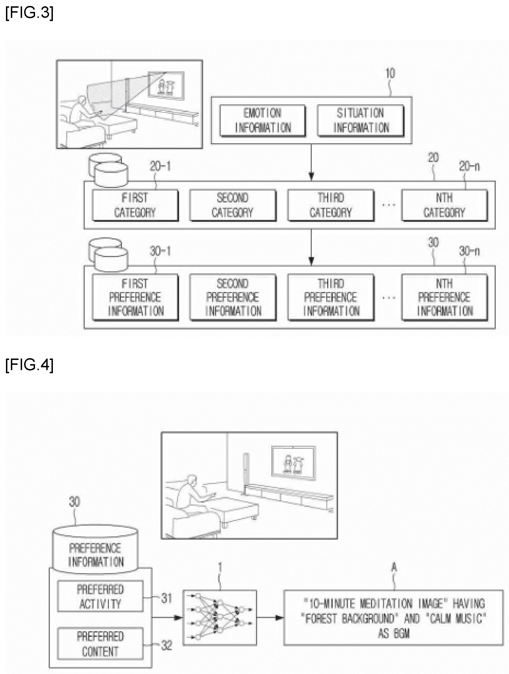

FIG. 3 is a diagram illustrating a category corresponding to a user context according to an embodiment of the present disclosure.

Referring to FIG. 3, at least one processor 130 may identify a category 20 corresponding to a user context 10 among the plurality of categories 20.

According to an embodiment, each of the plurality of categories 20 may be classified according to an emotion, health, a situation, an action, or the like of the user, and at least one processor 130 may identify the category 20 corresponding to the user context 10 among the plurality of categories 20.

For example, at least one processor 130 may identify the category 20 corresponding to the user context 10 by inputting the first sensing data or the user context 10 identified based on the first sensing data to the neural network model.

Here, the neural network model may output the category 20 corresponding to the user context 10 based on at least one of emotion information or situation information of the user. According to an embodiment, the neural network model may output the category 20 corresponding to the user context 10 among the plurality of pre-classified categories 20, or may output the newly generated category 20.

For example, when the emotion information is "sadness" and the situation information is "immediately after returning home," at least one processor 130 may identify "a state in need of rest" as the category 20 corresponding to the user context 10.

For example, when the emotion information is "boredom" and the situation information is "exercise," at least one processor 130 may identify "a state in need of motivation for exercise" as the category 20 corresponding to the user context 10.

For example, when the emotion information is "anger," at least one processor 130 may identify "a state in need of anger management tips" as the category 20 corresponding to the user context 10.

For example, when the situation information is "studying," at least one processor 130 may identify "a state in need of a method for improving concentration" as the category 20 corresponding to the user context 10.

According to an embodiment, at least one processor 130 may obtain the preference information 30 corresponding to the category 20.

For example, the preference information 30 may include at least one of a preferred activity or a preferred content of the user corresponding to the category 20.

For example, at least one processor 130 may obtain the preference information 30 based on usage history information of the user. For example, at least one processor 130 may identify an activity preferred by the user or content preferred by the user based on the usage history information.

For example, when the user watches an image including calm music and a forest background during rest based on the usage history information and the category 20 corresponding to the user context 10 is "a state in need of rest," at least one processor 130 may identify "image playback" as a preferred activity and may identify "calm music" and "an image of a forest background" as preferred content, thereby obtaining the preference information 30.

For example, when the user listens to music of 120 to 140 beats per minute (bpm) during exercise based on the usage history information and the category 20 corresponding to the user context 10 is "a state in need of motivation for exercise," at least one processor 130 may identify "music playback" as a preferred activity and may identify "music of 120 to 140 bpm" as preferred content, thereby obtaining the preference information 30.

However, at least one processor 130 is not limited thereto, and may obtain the preference information 30 corresponding to the user context 10 by inputting the first sensing data or the user context 10 identified based on the first sensing data to the neural network model.

Here, the neural network model may output the preference information 30 corresponding to the user context 10 by learning the usage history information of the user and based on at least one of emotion information or situation information of the user.

However, the neural network model is not limited thereto, and may output the preference information 30 when the category 20 corresponding to the user context 10 is input thereto. For example, at least one processor 130 may input "a state in need of a method for improving concentration" to the neural network model and output "music playback" as a preferred activity and may output "content including white noise" as preferred content. According to an embodiment, the preference information 30 may include at least one of a preferred activity or a preferred content.

According to an embodiment, the display device 100 may include a memory, and the preference information 30 corresponding to each of the plurality of pre-classified categories 20 may be pre-stored in the memory.

FIG. 4 is a diagram illustrating a prompt corresponding to a user context according to an embodiment of the present disclosure.

Referring to FIG. 4, at least one processor 130 may identify the category 20 corresponding to the user context 10, and may obtain a prompt A corresponding to the user context 10 by inputting the preference information 30 corresponding to the identified category 20 to a first neural network model 1.

For example, as described with reference to FIG. 3, when the category 20 corresponding to the user context 10 is "a state in need of rest," at least one processor 130 may identify "image playback" as a preferred activity 31 and may identify "calm music" and "an image of a forest background" as preferred content 32, thereby obtaining the preference information 30.

However, the foregoing example is provided for convenience of description, and the preferred activity 31 and the preferred content 32 may be changed based on the usage history information of the user.

According to an embodiment, at least one processor 130 may obtain the prompt A by inputting the preference information 30 including at least one of the preferred activity 31 or the preferred content 32 to the first neural network model 1.

According to an embodiment, the prompt A may include text to be input to the second neural network model to obtain an image corresponding to the user context. For example, the prompt A may include an instruction (or a command (instruction)) for the second neural network model to generate an image corresponding to the user context, and a condition (or information) for the image.

For example, the prompt A may include text corresponding to at least one of a background included in the image, an object included in the image, a sound included in the image, or a length of the image. Referring to FIG. 3, when the preference information 30 is input to the first neural network model 1, the first neural network model 1 may output, as the prompt A, "Generate a 10-minute meditation image including 'forest background' and 'calm music' as background music (BGM)" based on at least one of the preferred activity 31 and the preferred content 32.

According to an embodiment, the first neural network model 1 may be a large language model (LLM).

According to an embodiment, the prompt A may be text to be input to the second neural network model generating the image corresponding to the user context, and may include an "instruction" indicating a specific task or instruction desired to be performed by the second neural network model, "context information" referring to external information or additional context for adjusting the second neural network model, "input data" indicating an input or question for finding an answer, and "output data" indicating an output type or format of the second neural network model.

According to an embodiment, the prompt A may be a storyline of the image generated by the second neural network model.

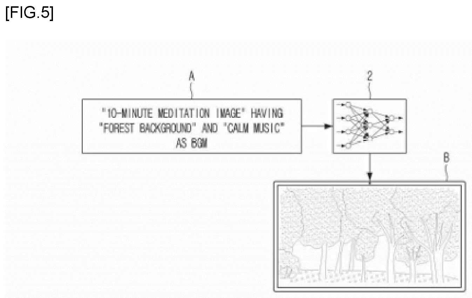

FIG. 5 is a diagram illustrating an image corresponding to a prompt according to an embodiment of the present disclosure.

Referring to FIG. 5, when the first neural network model 1 outputs the prompt A, at least one processor 130 may obtain an image B by inputting the prompt A to the second neural network model 2.

According to an embodiment, the second neural network model 2 may be generative artificial intelligence.

For example, the second neural network model 2 may be a text-to-video (TTV) model trained to generate the image B corresponding to the prompt A when the prompt A including text is input thereto.

A function related to artificial intelligence according to the present disclosure may be performed by the processor 130 and through the memory of the display device 100.

The processor 130 may include one or more processor. Here, one or more processors may include at least one of a central processing unit (CPU), a graphics processing unit (GPU), or a neural processing unit (NPU). However, one or more processors are not limited to the above-described examples of the processors.

The CPU may be a general-purpose processor capable of performing artificial intelligence operations as well as general operations, and may efficiently execute a complex program through a multi-layer cache structure. The CPU may be advantageous for a serial processing method enabling organic linkage between a previous calculation result and a next calculation result through sequential calculations. The general-purpose processor is not limited to the examples described above, except when specified as the above-described CPU.

The GPU may be a processor for large-scale operations such as floating-point operations used for graphic processing, and may perform large-scale operations in parallel by integrating a large number of cores. In particular, the GPU may be advantageous for a parallel processing method such as a convolution operation, as compared with the CPU. In addition, the GPU may be used as a co-processor for complementing a function of the CPU. The processor for large-scale operations is not limited to the examples described above, except when specified as the GPU described above.

The NPU may be a processor specialized for artificial intelligence operations using an artificial neural network, and each layer included in the artificial neural network may be implemented as hardware (e.g., silicon). Here, the NPU may be designed in a specialized manner according to required specifications of a company, and may thus have lower flexibility than the CPU or the GPU. However, the NPU may efficiently process artificial intelligence operations required by the company. Meanwhile, as a processor specialized for artificial intelligence operations, the NPU may be implemented in various forms such as a tensor processing unit (TPU), an intelligence processing unit (IPU), a vision processing unit (VPU), or the like. The artificial intelligence processor is not limited to the examples described above, except when specified as the above-described NPU.

In addition, one or more processors may be implemented as a system on chip (SoC). Here, the SoC may further include, in addition to one or more processors, a memory, and a network interface such as a bus for data communication between one or more processors and the memory.

When a plurality of processors are included in a system on chip (SoC) included in the display device 100, the display device 100 may perform operations related to artificial intelligence by using some of the plurality of processors (for example, operations related to learning or inference of an artificial intelligence model). For example, the display device 100 may perform operations related to artificial intelligence by using at least one of a GPU, an NPU, a VPU, a TPU, or a hardware accelerator specialized for artificial intelligence operations such as convolution operations or matrix multiplication operations among the plurality of processors. However, the foregoing example is only an embodiment, and the display device 100 may also perform operations related to artificial intelligence by using a CPU or another general-purpose processor.

In addition, the display device 100 may perform operations related to functions related to artificial intelligence by using a multicore included in one processor (for example, a dual core or a quad core). In particular, the display device 100 may perform artificial intelligence operations such as convolution operations or matrix multiplication operations in parallel by using the multicore included in the processor.

One or more processors may control processing of input data according to predefined operation rules or an artificial intelligence model stored in a memory. The predefined operation rules or the artificial intelligence model may be generated through learning.

Here, being generated through learning indicates that the predefined operation rules or the artificial intelligence model having desired characteristics may be generated by applying a learning algorithm to a plurality of learning data. Such learning may be performed by an apparatus itself in which artificial intelligence according to the present disclosure is performed, or may be performed through a separate server/system.

The artificial intelligence model may include a plurality of neural network layers. At least one layer may have at least one weight value, and perform an operation of the layer by using a calculation result of a previous layer and at least one defined operation. Examples of the neural network may include a convolutional neural network (CNN), a deep neural network (DNN), a recurrent neural network (RNN), a restricted Boltzmann machine (RBM), a deep belief network (DBN), a bidirectional recurrent deep neural network (BRDNN), deep Q-networks, and a transformer, and the neural network according to the present disclosure is not limited to the examples described above, except when specified.

The learning algorithm may be a method for training a predetermined target apparatus (for example, a robot) by using a plurality of learning data to allow the predetermined target apparatus itself to make a determination or a prediction. Examples of the learning algorithm may include supervised learning, unsupervised learning, semi-supervised learning, or reinforcement learning, and the learning algorithm in the present disclosure is not limited to the examples described above, except when specified.

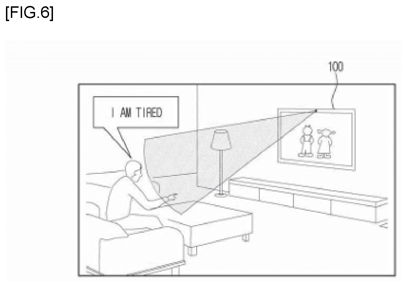

FIG. 6 is a diagram illustrating the display device identifying a user context according to an embodiment of the present disclosure.

Referring to FIG. 6, a sensor 120 of the display device 100 may sense the user and may obtain the first sensing data. For example, the sensor 120 may obtain image data including the user or voice data of the user (e.g., "I am tired").

According to an embodiment, at least one processor 130 may analyze an emotion of the user or a situation of the user based on at least one of the image data or the voice data.

According to an embodiment, at least one processor 130 may identify the user context 10 corresponding to the first sensing data from the memory in which emotion information and situation information corresponding to at least one of a pose of the user, a facial expression of the user, or a surrounding environment of the user are pre-stored, or may identify the user context 10 by inputting the first sensing data to the neural network model.

For example, at least one processor 130 may identify an emotion of the user or a situation of the user based on a pose of the user, a facial expression of the user, or a surrounding environment of the user included in the image data.

For example, when a pose of the user is sitting on a sofa or lying down, at least one processor 130 may identify situation information of the user as "rest," and may identify emotion information of the user as "sadness" by analyzing a facial expression of the user.

For example, when a surrounding environment of the user is dark and a light is turned on, at least one processor 130 may identify situation information of the user as "rest."

However, the foregoing example is provided for convenience of description. A pose of the user, a facial expression of the user, or the like may be variously changed, and situation information of the user and emotion information of the user may also be variously changed.

At least one processor 130 may identify an emotion of the user or a situation of the user based on a voice of the user included in the voice data, surrounding noise of the user, or the like.

For example, at least one processor 130 may identify emotion information of the user as "tiredness" based on a voice of the user mentioning "I am tired," and, when surrounding noise of the user is less than a threshold decibel, may identify situation information of the user as "rest."

The foregoing example is provided for convenience of description. A voice of the user, surrounding noise of the user, or the like may be variously changed, and situation information of the user and emotion information of the user may also be variously changed.

For example, at least one processor 130 may identify situation information of the user as "exercise" based on a voice of the user counting the number of exercises, and may identify situation information of the user as "cooking" based on surrounding noise including a sound of boiling water.

According to an embodiment, at least one processor 130 may identify the category 20 corresponding to the user context 10 among a plurality of categories based on the user context 10 including at least one of emotion information or situation information, and may obtain the prompt A by inputting the preference information 30 corresponding to the identified category 20 to the first neural network model 1.

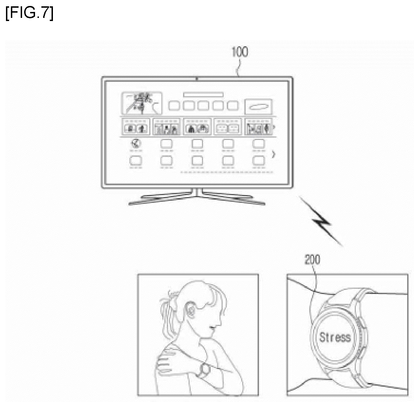

FIG. 7 is a diagram illustrating the display device identifying a user context by communicating with an external device according to an embodiment of the present disclosure.

According to an embodiment, the display device 100 may further include a communication interface 140.

According to an embodiment, the communication interface 140 may include a wired or wireless input/output interface (or an input/output terminal) according to various standards. For example, the communication interface 140 may include various interfaces such as a high definition multimedia interface (HDMI), a mobile high-definition link (MHL), a universal serial bus (USB), a display port (DP), thunderbolt, a video graphics array (VGA) port, a red-green-blue (RGB)port, a D-subminiature (D-SUB), a digital visual interface (DVI), AP-based Wi-Fi (wireless LAN network), Bluetooth, Zigbee, a wired/wireless local area network (LAN), a wide area network (WAN), Ethernet, IEEE 1394, an Audio Engineering Society/European Broadcasting Union (AES/EBU), optical, coaxial, or the like.

According to an embodiment, at least one processor 130 may communicate with an external device 200 through communication interface 140.

According to an embodiment, the external device 200 may include a wearable device. The wearable device may be implemented as at least one of an accessory type (e.g., a watch, a ring, a bracelet, an anklet, a necklace, glasses, a contact lens, or a head-mounted-device (HMD)), a textile or clothing-integrated type (e.g., electronic clothing), a body-attached type (e.g., a skin pad or a tattoo), or an implantable circuit.

However, the external device 200 is not limited thereto, and may be implemented as an electronic apparatus such as a set-top box, a cloud server, an over-the-top media service (OTT service) server, a streaming service (e.g., Samsung Gaming Hub), a home automation control panel, a security control panel, a media box (e.g., Samsung HomeSync^{™}, Apple TV^{™}, or Google TV^{™}), a game console (e.g., Xbox^{™}, PlayStation^{™}, or Switch^{™}), an electronic dictionary, an electronic key, a camcorder, or an electronic picture frame. However, the external device 200 is not limited thereto, and may include at least one of a television (TV), a user terminal apparatus, a tablet personal computer (PC), a mobile phone, a video phone, an electronic book reader, a desktop PC, a laptop PC, a netbook computer, a workstation, a server, a personal digital assistant (PDA), a portable multimedia player (PMP), an MP3 player, a medical device, a camera, a virtual reality (VR) apparatus, or a spatial computing apparatus.

According to an embodiment, the external device 200 may obtain the first sensing data including at least one of image data including the user or voice data of the user and may transmit the first sensing data to the display device 100.

According to an embodiment, the external device 200 may also obtain second sensing data and may transmit the second sensing data to the display device 100. For example, the second sensing data may include at least one of an activity amount (e.g., the number of steps or an amount of exercise), a heart rate, a blood pressure, a body temperature, an electrocardiogram (ECG), body composition, a sleep pattern, or a stress index of the user.

According to an embodiment, when the second sensing data is received from the external device 200, at least one processor 130 may identify the user context 10 based on the second sensing data.

For example, when a heart rate of the user obtained from a heart rate sensor (e.g., an HRM sensor) increases or changes irregularly, the external device 200 may identify a stress index.

According to an embodiment, when the second sensing data including a stress index is received from the external device 200, at least one processor 130 may identify "anger," "depression," "fatigue," or the like as emotion information of the user, and may obtain the user context 10 including the emotion information.

According to an embodiment, when the emotion information is "anger," at least one processor 130 may identify "a state in need of anger management tips" as the category 20 corresponding to the user context 10.

According to an embodiment, at least one processor 130 may input "a state in need of anger management tips," which is the category 20 corresponding to the user context 10, to the neural network model, or may identify "image playback" as the preferred activity 31 and identify "calm music" and "an image of a forest background" as the preferred content 32 by using usage history information, thereby obtaining the preference information 30.

According to an embodiment, at least one processor 130 may obtain a prompt corresponding to the user context by inputting the preference information 30 to the first neural network model 1. According to an embodiment, the first neural network model may generate a prompt including text corresponding to at least one of a background included in the image B, an object included in the image B, music included in the image B (e.g., background music), or a length of the image based on at least one of the preferred activity 31 or the preferred content 32.

However, the present disclosure is not limited thereto. For example, when situation information of the user is "sleep deprivation" based on a sleep pattern included in the second sensing data, at least one processor 130 may identify "a state in need of a sleep induction image" as the category 20 corresponding to the user context 10.

According to an embodiment, at least one processor 130 may input "a state in need of a sleep induction image," which is the category 20 corresponding to the user context 10, to the neural network model, or may identify "image playback" as the preferred activity 31 and identify "a natural background image including a bird sound, a wave sound, a wind sound, or the like" as the preferred content 32 by using usage history information, thereby obtaining the preference information 30.

According to an embodiment, at least one processor 130 may obtain a prompt corresponding to the user context by inputting the preference information 30 to the first neural network model 1. According to an embodiment, the first neural network model may output, as the prompt A, "Generate a 10-minute natural image including a bird sound, a wave sound, a wind sound, or the like."

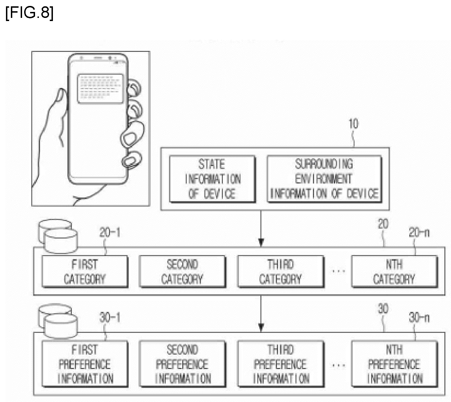

FIG. 8 is a diagram illustrating state information and surrounding environment information of the display device according to an embodiment of the present disclosure.

According to an embodiment of the present disclosure, the user context 10 may include at least one of state information of the display device 100 or surrounding environment information of the display device 100.

For example, at least one processor 130 may identify the user context 10 indicating reception of a notification when the reception of the notification is identified based on state information of the display device 100.

For example, at least one processor 130 may identify the user context 10 indicating a location change of the display device 100 when a location of the display device 100 is changed into a predetermined space (e.g., a home) based on state information of the display device 100.

According to an embodiment, the user context 10 may include at least one of state information of the external device 200 or surrounding environment information of the external device 200.

For example, at least one processor 130 may identify the user context 10 indicating reception of a notification when the reception of the notification is identified based on state information of the external device 200, and at least one processor 130 may identify the user context 10 indicating a location change of the external device 200 when a location of the external device 200 is changed into a predetermined space based on state information of the external device 200.

Referring to FIG. 8, when the user context 10 indicating the reception of the notification is identified in the external device 200, at least one processor 130 may identify the category 20 corresponding to the user context 10 among the plurality of categories 20.

For example, at least one processor 130 may identify "a state in which a notification is received" as the category 20 corresponding to the user context 10, and may obtain the preference information 30 corresponding to the category 20. For example, at least one processor 130 may identify an activity preferred by the user or content preferred by the user based on usage history information, thereby obtaining the preference information 30.

For example, when the category 20 corresponding to the user context 10 is "a state in which a notification is received," at least one processor 130 may identify "notification checking" as the preferred activity 31.

According to an embodiment, at least one processor 130 may obtain the prompt A by inputting the preference information 30 to the first neural network model 1. At least one processor 130 may obtain the image B corresponding to the prompt A by inputting the prompt A to the second neural network model 2.

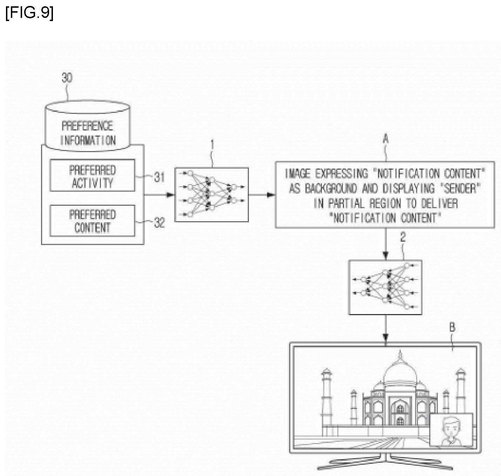

FIG. 9 is a diagram illustrating a prompt corresponding to a user context according to an embodiment of the present disclosure.

Referring to FIG. 9, at least one processor 130 may input the preference information 30 including "notification checking" as the preferred activity 31 to the first neural network model 1, and the first neural network model 1 may output, as the prompt A, "Generate an image expressing notification content as a background and displaying a sender in a partial region to deliver the notification content."

At least one processor 130 may input prompt A to second neural network model 2, and may obtain image B corresponding to prompt A.

For example, when the notification content is "I am going to the Taj Mahal next week," the second neural network model 2 may generate the image B including the Taj Mahal as a background, displaying a sender in a partial region (e.g., a lower right side), and including a voice corresponding to "I am going to the Taj Mahal next week," and at least one processor 130 may display the image B.

However, the foregoing example is only illustrative, and the present disclosure is not limited thereto. For example, when a location of the external device 200 is changed into a predetermined space (e.g., a home) based on state information of the external device 200 (e.g., a user terminal apparatus), at least one processor 130 may identify the user context 10 indicating the location change of the external device 200.

According to an embodiment, at least one processor 130 may identify "a state in which the user returned home" as a category corresponding to the user context 10 based on the user context 10 in which the external device 200 is changed into the predetermined space based on state information of the external device 200.

When the user checks an unchecked notification after returning home based on usage history information, at least one processor 130 may identify "unchecked notification checking" as a preferred activity when the category 20 corresponding to the user context 10 is "a state in which the user returned home," thereby obtaining the preference information 30.

According to an embodiment, at least one processor 130 may input the preference information 30 including "unchecked notification checking" as the preferred activity 31 to the first neural network model 1, and the first neural network model 1 may output, as the prompt A, "Generate an image expressing notification content as a background and displaying a sender in a partial region to deliver the notification content."

As another example, when the user watches an image including calm music in a natural background after returning home based on usage history information, at least one processor 130 may identify "image playback" as a preferred activity and may identify "calm music" and "a natural background image" as preferred content when the category 20 corresponding to the user context 10 is "a state in which the user returned home," thereby obtaining the preference information 30. According to an embodiment, the first neural network model 1 may output, as the prompt A, "Generate a 10-minute image having 'a natural background' and 'calm music' as background music (BGM)" based on at least one of the preferred activity 31 and the preferred content 32.

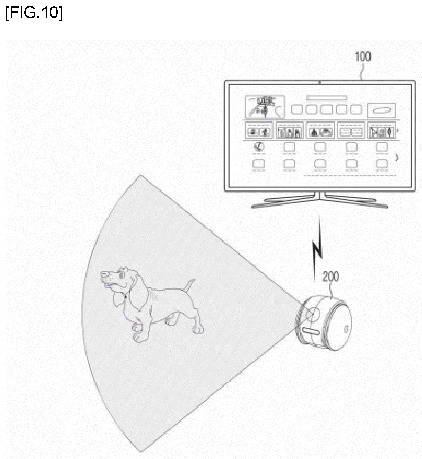

FIG. 10 is a diagram illustrating a prompt corresponding to surrounding environment information of the display device according to an embodiment of the present disclosure.

According to an embodiment, the user context 10 may include at least one of surrounding environment information of the display device 100 or surrounding environment information of the external device 200.

For example, when a pet is identified based on surrounding environment information received from the external device 200, at least one processor 130 may identify "a state in which a pet is identified" as the category 20 corresponding to the user context 10.

According to an embodiment, when "an image preferred by a dog" is played based on usage history information, at least one processor 130 may identify "an image preferred by a dog" as the preferred content 32 and identify "image playback" as the preferred activity 31 when the category 20 corresponding to the user context 10 is "a state in which a pet is identified," thereby obtaining the preference information 30.

According to an embodiment, at least one processor 130 may input the preference information 30 to the first neural network model 1 and may output, as the prompt A, "Generate a 20-minute image including a color and a sound preferred by a dog."

However, the foregoing example is provided for convenience of description, and the present disclosure is not limited thereto.

For example, when the external device 200 includes a motion detection sensor attached to a pet, at least one processor 130 may receive surrounding environment information received from the external device 200 and may identify the user context 10. According to an embodiment, the surrounding environment information may include an activity amount of the pet (e.g., the number of steps).

According to an embodiment, when an activity amount of the pet is identified based on surrounding environment information received from the external device 200 and the activity amount is less than a predetermined activity amount, at least one processor 130 may identify "a state in need of exercise of the pet" as the category 20 corresponding to the user context 10.

According to an embodiment, when "an image in which a dog takes a walk" is played based on usage history information, at least one processor 130 may identify "an image in which a dog runs and plays" as the preferred content 32 and identify "image playback" as the preferred activity 31 when the category 20 corresponding to the user context 10 is "a state in need of exercise of the pet," thereby obtaining the preference information 30.

According to an embodiment, at least one processor 130 may input the preference information 30 to the first neural network model 1 and may output, as the prompt A, "Generate an image guiding exercise of a dog or an image in which a dog runs and plays to achieve a predetermined activity amount."

According to an embodiment, at least one processor 130 may obtain the preference information 30 by using usage history information of the user, or may obtain the category 20 corresponding to the user context 10 among the plurality of categories 20 and at least one of a guide activity or a guide content corresponding to the category by inputting the user context 10 to a third neural network model.

At least one processor 130 may obtain the prompt A by inputting at least one of the guide activity or the guide activity to the first neural network model 1.

When the user context 10 is input thereto, the third neural network model may output, as the guide activity or the guide content, an activity preferred by an unspecified number of users and content preferred by the unspecified number of users, respectively.

Referring back to FIG. 2, according to an embodiment, the display device 100 may further include the memory, and the memory may store data for various embodiments of the present disclosure. The memory may be implemented as a memory embedded in the display device 100 according to a data storage purpose, or may be implemented as a memory detachable from the display device 100.

For example, data for driving the display device 100 may be stored in a memory embedded in the display device 100, and data for an extended function of the display device 100 may be stored in a memory detachable from the display device 100. Meanwhile, the memory embedded in the display device 100 may be implemented as at least one of a volatile memory (e.g., a dynamic RAM (DRAM), a static RAM (SRAM), or a synchronous dynamic RAM (SDRAM)) or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash or a NOR flash), a hard drive, or a solid state drive (SSD)). In addition, the memory detachable from the display device 100 may be implemented as a memory card (for example, a compact flash (CF), a secure digital (SD), a micro secure digital (Micro-SD), a mini secure digital (Mini-SD), an extreme digital (xD), or a multi-media card (MMC)), an external memory connectable to a USB port (for example, a USB memory), or the like.

According to an embodiment, the memory may store a computer program including at least one instruction or instructions for controlling the display device 100.

According to an embodiment, the display device 100 may generate the prompt A in an ambient mode displaying predetermined content, and may generate and play the image B corresponding to the prompt A.

For example, the display device 100 may operate in an ambient mode (or a standby mode) displaying a schedule, weather, stocks, or the like, and may generate and play the image B corresponding to the prompt A in the ambient mode, rather than in a normal mode displaying an OTT image, a streaming image, or the like.

According to an embodiment, the display device 100 may obtain the prompt A by inputting, to the neural network model, at least one of the first sensing data, the second sensing data, the state information of the display device 100, the surrounding environment information of the display device 100, the state information of the external device 200, or the surrounding environment information of the external device 200, and may obtain the image B by inputting the prompt A to the second neural network model 2.

According to an embodiment, the display device 100 may obtain the image B by inputting, to the neural network model, at least one of the first sensing data, the second sensing data, the state information of the display device 100, the surrounding environment information of the display device 100, the state information of the external device 200, or the surrounding environment information of the external device 200.

According to an embodiment, the display device 100 may transmit, to an external server, at least one of the first sensing data, the second sensing data, the state information of the display device 100, the surrounding environment information of the display device 100, the state information of the external device 200, or the surrounding environment information of the external device 200, and may receive the prompt A or the image B corresponding to the prompt A from the external server.

For example, the display device 100 may identify the category 20 corresponding to the user context 10, and may transmit at least one of a preferred activity or a preferred content corresponding to the identified category 20 to the external server. According to an embodiment, when the image B is received from the external server, the display device 100 may display the image B.

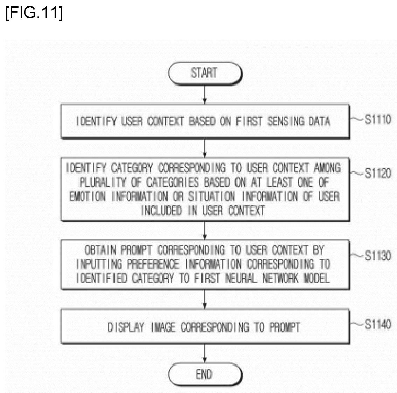

FIG. 11 is a flowchart illustrating a control method of a display device according to an embodiment of the present disclosure.

The control method of a display device according to an embodiment of the present disclosure may include identifying a user context based on first sensing data (S1110).

The control method may include identifying a category corresponding to the user context among the plurality of categories based on at least one of emotion information or situation information of a user included in the user context (S1120).

The control method may include obtaining a prompt corresponding to the user context by inputting preference information corresponding to the identified category to a first neural network model (S1130).

The control method may include displaying an image corresponding to the prompt (S1140).

The preference information according to an embodiment may include at least one of a preferred activity or a preferred content of the user corresponding to the identified category.

According to an embodiment, the first sensing data may include at least one of image data including the user or voice data of the user, and the identifying of the user context (S1110) may include obtaining the emotion information or the situation information based on a pose of the user, a facial expression of the user, a surrounding environment of the user included in the image data, or a voice of the user included in the voice data.

The control method according to an embodiment may further include receiving second sensing data from an external device, and the identifying of the user context (S1110) may include identifying the user context based on the second sensing data, and the second sensing data may include at least one of an activity amount, a heart rate, a blood pressure, a body temperature, an electrocardiogram (ECG), a sleep pattern, or a stress index of the user.

The prompt may include text corresponding to at least one of a background, an object, and a sound, included in the image, or a length of the image, and the displaying of the image (S1140) may include obtaining the image corresponding to the prompt by inputting the prompt to a second neural network model, and the second neural network model may be a text-to-video (TTV) model trained to generate the image corresponding to the prompt when the prompt including the text is input thereto.

The first neural network model according to an embodiment may generate a prompt including text corresponding to at least one of a background, an object, a sound, or the length of the image based on at least one of a preferred activity or a preferred content.

The user context according to an embodiment may further include at least one of state information of the display device or surrounding environment information of the display device, and the identifying of the category (S1120) may include identifying the category corresponding to the user context among the plurality of categories based on at least one of the state information or the surrounding environment information.

The identifying of the user context (S1120) according to an embodiment may include identifying the user context indicating reception of a notification when the reception of the notification is identified based on the state information of the display device, the obtaining of the prompt (S1130) may include obtaining the prompt by inputting a preferred activity of the user for checking the notification based on preference information to the first neural network model, and the image corresponding to the prompt may be an image providing the notification to the user based on a sender of the notification and content of the notification.

The control method according to an embodiment may further include obtaining the category corresponding to the user context among the plurality of categories and at least one of a guide activity or a guide content corresponding to the category by inputting the user context to a third neural network model, and the obtaining of the prompt (S1120) may include obtaining the prompt by inputting at least one of the guide activity or the guide content to the first neural network model.

The displaying of the image (S1140) according to an embodiment may include displaying the image corresponding to the prompt in an ambient mode in which the display device displays predetermined content.

The control method according to an embodiment may further include transmitting at least one of the preferred activity or the preferred content corresponding to the identified category to an external server, and the displaying of the image (S1140) may include receiving and displaying the image corresponding to the prompt from the external server.

However, various embodiments of the present disclosure may be applied not only to the display device, and also to various types of electronic apparatuses including a display function.

Meanwhile, the various embodiments described above may be implemented in a recording medium readable by a computer or an apparatus similar thereto by using software, hardware, or a combination thereof. In some cases, the embodiments described in the present disclosure may be implemented by the processor itself. In a software implementation, embodiments such as procedures and functions described in the present disclosure may be implemented as separate software modules. Each of the software modules may perform at least one of functions and operations described in the present disclosure.

Meanwhile, computer instructions for performing processing operations of the display device 100 according to the various embodiments of the present disclosure described above may be stored in a non-transitory computer-readable medium. When the computer instructions stored in the non-transitory computer-readable medium are executed by a processor of a specific apparatus, the computer instructions may cause the specific apparatus to perform processing operations of the display device 100 according to the various embodiments described above.

The non-transitory computer-readable medium refers to a medium storing data semi-permanently rather than a medium storing data temporarily, such as a register, a cache, or a memory, and being readable by an apparatus. Specific examples of the non-transitory computer-readable medium may include a compact disc (CD), a digital versatile disc (DVD), a hard disk, a Blu-ray disc, a universal serial bus (USB), a memory card, a read-only memory (ROM), or the like.

Although the embodiments of the present disclosure have been illustrated and described above, the present disclosure is not limited to the above-described specific embodiments, and various modified embodiments may be made by those skilled in the art to which the present disclosure pertains without departing from the gist of the present disclosure as claimed in the claims, and the modified embodiments should not be individually understood apart from the spirit or scope of the present disclosure.

## Claims

1. A display device comprising:
a display;
a sensor; and
at least one processor configured to
identify a user context based on first sensing data obtained by the sensor;
identify a category corresponding to the user context among a plurality of categories based on at least one of emotion information of a user included in the user context or situation information of the user included in the user context;
obtain a prompt corresponding to the user context by providing preference information corresponding to the identified category to a first neural network model, and
control the display to display an image corresponding to the prompt,
wherein the preference information includes at least one of a preferred activity or a preferred content of the user corresponding to the identified category.

2. The display device as claimed in claim 1, wherein the first sensing data comprises at least one of image data including the user or voice data of the user, and
the at least one processor is configured to obtain the emotion information or the situation information based on a pose of the user, a facial expression of the user, a surrounding environment of the user included in the image data, or a voice of the user included in the voice data.

3. The display device as claimed in claim 1, further comprising a communication interface,
wherein the at least one processor is configured to
obtain second sensing data from an external device through the communication interface; and
identify the user context based on the second sensing data, and
wherein the second sensing data comprises at least one of an activity amount, a heart rate, a blood pressure, a body temperature, an electrocardiogram (ECG), a sleep pattern, or a stress index of the user.

4. The display device as claimed in claim 1, wherein the prompt comprises text corresponding to at least one of a background, an object, a sound included in the image, or a length of the image, and
the at least one processor is configured to
obtain the image corresponding to the prompt by providing the prompt to a second neural network model, and
wherein the second neural network model is a text-to-video (TTV) model trained to generate the image corresponding to the prompt when the prompt including the text is provided thereto.

5. The display device as claimed in claim 4, wherein the first neural network model is configured to generate the prompt including the text corresponding to at least one of the background, the object, the sound, or the length of the image based on at least one of the preferred activity or the preferred content.

6. The display device as claimed in claim 1, wherein the user context further comprises at least one of state information of the display device or surrounding environment information of the display device, and
the at least one processor is configured to identify the category corresponding to the user context among the plurality of categories based on at least one of the state information or the surrounding environment information.

7. The display device as claimed in claim 6, wherein the at least one processor is configured to
identify the user context indicating reception of a notification when the reception of the notification is identified based on the state information of the display device;
obtain the prompt by providing the preferred activity of the user for checking the notification based on the preference information to the first neural network model; and
display the image corresponding to the prompt, and
wherein the image corresponding to the prompt is an image providing the notification to the user based on a sender of the notification and content of the notification.

8. The display device as claimed in claim 1, wherein the at least one processor is configured to
obtain the category corresponding to the user context among the plurality of categories and at least one of a guide activity or a guide content corresponding to the category by providing the user context to a third neural network model; and
obtain the prompt by providing at least one of the guide activity or the guide content to the first neural network model.

9. The display device as claimed in claim 1, wherein the at least one processor is configured to display the image corresponding to the prompt in an ambient mode displaying predetermined content.

10. The display device as claimed in claim 1, further comprising a communication interface,
wherein the at least one processor is configured to
transmit at least one of the preferred activity or the preferred content corresponding to the identified category to an external server through the communication interface, and
receive the image corresponding to the prompt from the external server and display the image.

11. A control method of a display device, the control method comprising:
identifying a user context based on first sensing data;
identifying a category corresponding to the user context among a plurality of categories based on at least one of emotion information of a user included in the user context or situation information of the user included in the user context;
obtaining a prompt corresponding to the user context by providing preference information corresponding to the identified category to a first neural network model; and
displaying an image corresponding to the prompt,
wherein the preference information includes at least one of a preferred activity or a preferred content of the user corresponding to the identified category.

12. The control method as claimed in claim 11, wherein the first sensing data comprises at least one of image data including the user or voice data of the user, and
wherein the identifying of the user context comprises obtaining the emotion information or the situation information based on a pose of the user, a facial expression of the user, a surrounding environment of the user included in the image data, or a voice of the user included in the voice data.

13. The control method as claimed in claim 11, further comprising obtaining second sensing data from an external device,
wherein the identifying of the user context comprises identifying the user context based on the second sensing data, and
wherein the second sensing data comprises at least one of an activity amount, a heart rate, a blood pressure, a body temperature, an electrocardiogram (ECG), a sleep pattern, or a stress index of the user.

14. The control method as claimed in claim 11, wherein the prompt comprises text corresponding to at least one of a background, an object, and a sound, included in the image, or a length of the image, and
wherein the displaying of the image comprises obtaining the image corresponding to the prompt by providing the prompt to a second neural network model, and
wherein the second neural network model is a text-to-video (TTV) model trained to generate the image corresponding to the prompt when the prompt including the text is provided thereto.

15. A non-transitory computer-readable medium storing computer instructions which, when executed by at least one processor of a display device, cause the display device to perform operations comprising:
identifying a user context based on first sensing data;
identifying a category corresponding to the user context among a plurality of categories based on at least one of emotion information of a user included in the user context or situation information of the user included in the user context;
obtaining a prompt corresponding to the user context by providing preference information corresponding to the identified category to a first neural network model; and
displaying an image corresponding to the prompt,
wherein the preference information includes at least one of a preferred activity or a preferred content of the user corresponding to the identified category.
